# EUROPEAN PATENT APPLICATION

(11) **EP 3 089 301 A1**
(43) Date of publication of application: **02.11.2016**
(21) Application number: 14875480.7
(22) Date of filing: 24.12.2014
(51) Int. Cl.: H02H 3/087

(54) **BIDIRECTIONAL DIRECT CURRENT CIRCUIT BREAKER**

(30) Priority: 26.12.2013 KR 20130163719
(71) Applicant: Hyosung Corporation, Seoul 121-720 (KR)
(72) Inventor: HWANG, Hui Dong, Changwon-si, Gyeongsangnam-do 51525 (KR); CHUNG, Young Hwan, Changwon-si, Gyeongsangnam-do 51531 (KR); KIM, Nam Kyung, Changwon-si Gyeongsangnam-do 51468 (KR)
(74) Representative: Viering, Jentschura & Partner mbB Patent- und Rechtsanwälte
(86) International application number: PCT/KR2014/012857
(87) International publication number: WO 2015/099468

(57) **Abstract**

The present invention relates to a bidirectional direct current (DC) circuit breaker for interrupting a fault current flowing through a DC line for power transmission or distribution in case a fault occurs at one side of the DC line. The bidirectional DC circuit breaker according to the present invention comprises: a main switch installed in a DC line, for interrupting the electric current of the DC line by being opened in case a fault occurs at one side or the other side of the DC line; an LC circuit, which is connected in parallel to the main switch (110) and comprises a capacitor and a reactor connected in series to each other; a switching element for charging, which is connected in series to the LC circuit and performs switching so as to supply a charging current for charging the capacitor; first and second switching elements for forming a first closed circuit between the LC circuit and the main switch and switching the flow of current in a first direction; and third and fourth switching elements for forming a second closed circuit between the LC circuit and the main switch and switching the flow of current in a second direction.

## Description

### Technical Field

The present invention relates, in general, to a bidirectional direct current (DC) circuit breaker and, more particularly, to a bidirectional DC circuit breaker that breaks a bidirectional fault current flowing in a DC line for power transmission or distribution when a fault occurs on one side or the other side of the DC line.

### Background Art

Generally, a bidirectional DC circuit breaker is a switching device that may break current flowing through a high-voltage transmission line carrying 50kV or more, such as a High-Voltage Direct Current (HVDC) transmission system. That is, the bidirectional DC circuit breaker is installed in a DC line and serves to break a fault current so as to prevent the supply thereof when a fault occurs on one side or the other side of the DC line. Of course, it may also be applied to an intermediate voltage DC distribution system for a DC voltage level that ranges approximately from 1 to 50kV.

When a fault current occurs in a system, the bidirectional DC circuit breaker opens a main switch installed in a DC line so as to disconnect the circuit in which the fault occurred, whereby the fault current is interrupted. However, because there is no zero current point in a DC line, an arc, generated across the terminals of a main switch when the main switch is opened, is not extinguished. Accordingly, the fault current continuously flows through the arc, and thus the fault current cannot be interrupted.

In Japanese Patent Application Publication No. 1984-068128, illustrated in FIG. 1, in order to break a fault current Idc by extinguishing an arc, which is generated when a main switch CB is switched in a bidirectional DC circuit breaker, a technique in which the arc is extinguished by a zero current at the main switch CB, which is formed by adding a resonance current Ip, generated by an L/C circuit, to a DC current I_{DC}, which flows in the main switch CB (Idc = I_{DC} + Ip), is provided. Specifically, when a fault occurs, the main switch CB is opened and the fault current Idc continuously flows through an arc. At this time, a resonance current Ip is applied to be superposed onto the DC current I_{DC} in the main switch CB. Then, the resonance current Ip oscillates due to LC resonance and the magnitude thereof increases as the oscillation is repeated along the main switch CB. Accordingly, the magnitude of the negative (-) resonance current -Ip becomes greater than I_{DC}, and when the fault current Idc becomes a zero current, the arc of the main switch CB is extinguished.

However, according to this conventional art, because it is necessary to superpose a resonance current Ip, which is greater than the DC current I_{DC}, the circuit rating must be more than two times that of the rated current. Also, in order to realize such a large resonance current Ip, multiple resonations are necessary, and thus the breaking speed is decreased. Also, the conventional DC circuit breaker has a problem in that it cannot interrupt a bidirectional fault current.

### Disclosure

### Technical Problem

An object of the present invention is to provide a bidirectional DC circuit breaker that may completely break a fault current in a main switch even if the bidirectional DC circuit breaker does not apply a resonance current to the main switch.

Another object of the present invention is to provide a bidirectional DC circuit breaker that may break a fault current, flowing through an arc, by intentionally making a zero current point in order to eliminate the arc generated in a main switch when the main switch is opened.

A further object of the present invention is to provide a bidirectional DC circuit breaker that may break a bidirectional fault current in a high-voltage DC line.

### Technical Solution

In order to accomplish the above objects, a bidirectional DC circuit breaker according to the present invention includes a main switch, installed in the DC line, for breaking current of the DC line by being opened when a fault occurs on one side or the remaining side of the DC line; an L/C circuit, which is connected in parallel with the main switch (110) and includes a capacitor and a reactor, which are connected in series with each other; a switching element for charging, which is connected in series with the L/C circuit and is switched in order to supply a charging current for charging the capacitor; first and second switching elements for forming a first closed circuit between the L/C circuit and the main switch and switching a flow of current in a first direction; and third and fourth switching elements for forming a second closed circuit between the L/C circuit and the main switch and switching a flow of current in a second direction, wherein when the main switch is opened, current is supplied to the main switch in the first direction or the second direction by the voltage charged in the capacitor, whereby an arc generated in the main switch is extinguished.

In the present invention, a charging resistor (Rc), installed between the L/C circuit and a ground (GND), for charging the capacitor (131) using the charging current, is further included.

In the present invention, the switching element for charging and the first to fourth switching elements include a power semiconductor switch, turn-on/turn-off control of which is possible.

In the present invention, a diode, installed in the second closed circuit, for conducting current only in the second direction, is further included.

In the present invention, a nonlinear resistor connected in series with the diode in the second closed circuit is further included.

In the present invention, the first and second switching elements are connected with two ends of the L/C circuit and two ends of the main switch in the first closed circuit so as to conduct current in the first direction.

In the present invention, the third and fourth switching elements are connected with the two ends of the L/C circuit and the two ends of the main switch in the second closed circuit so as to conduct current in the second direction.

In the present invention, the switching element for charging is configured to conduct the charging current to the capacitor by being turned on in a state in which the main switch is closed, and to break the charging current from being supplied to the capacitor by being turned off when the main switch is opened due to a fault, which occurs on the one side or the remaining side.

In the present invention, if an arc is generated when the main switch is opened, the first and second switching elements are turned on, current is supplied to the main switch in the first direction by the voltage (Vc) charged in the capacitor, and the supplied current causes a zero current at the main switch, whereby the arc generated in the main switch is extinguished.

In the present invention, the current supplied to the main switch has a magnitude that is greater than that of a fault current and has a direction opposite to that of the fault current, which continuously flows through the arc in the main switch.

In the present invention, if an arc is generated when the main switch is opened, the third and fourth switching elements are turned on, current is supplied to the main switch in the second direction by the voltage (Vc) charged in the capacitor, and the supplied current causes a zero current at the main switch, whereby the arc generated in the main switch (110) is extinguished.

In the present invention, the current supplied to the main switch has a magnitude that is greater than that of a fault current and has a direction opposite to that of the fault current, which continuously flows through the arc in the main switch.

In the present invention, wherein when the arc is extinguished in the main switch, the switching element for charging is turned on so as to charge the capacitor, and when charging of the capacitor is completed, a closed circuit is formed by closing the main switch.

### Advantageous Effects

The present invention may quickly extinguish an arc that is generated when a main switch is switched in a bidirectional DC circuit breaker, whereby a fault current may be completely broken.

Also, the bidirectional DC circuit breaker according to the present invention may break a bidirectional fault current using a single circuit.

Also, according to the present invention, because a capacitor is discharged without reversing the polarity of voltage charged in the capacitor, the time taken to break a fault current may be reduced.

### Description of Drawings

FIG. 1 is a configuration diagram of a conventional DC circuit breaker;
FIG. 2 is a configuration diagram of a bidirectional DC circuit breaker according to an embodiment of the present invention;
FIG. 3 is a diagram that shows the flow of current in a normal state in a bidirectional DC circuit breaker according to an embodiment of the present invention;
FIG. 4 is a diagram that shows the process of breaking a fault current in a bidirectional DC circuit breaker according to the present invention when a fault occurs on one side of a high-voltage DC line; and
FIG. 5 is a diagram that shows the process of breaking a fault current in a bidirectional DC circuit breaker according to the present invention when a fault occurs on the other side of a high-voltage DC line.

### Best Mode

Hereinafter, a preferred embodiment of the present invention will be described in detail with reference to the accompanying drawings. Also, detailed descriptions of known functions and configurations which have been deemed to make the gist of the present invention unnecessarily obscure will be omitted below.

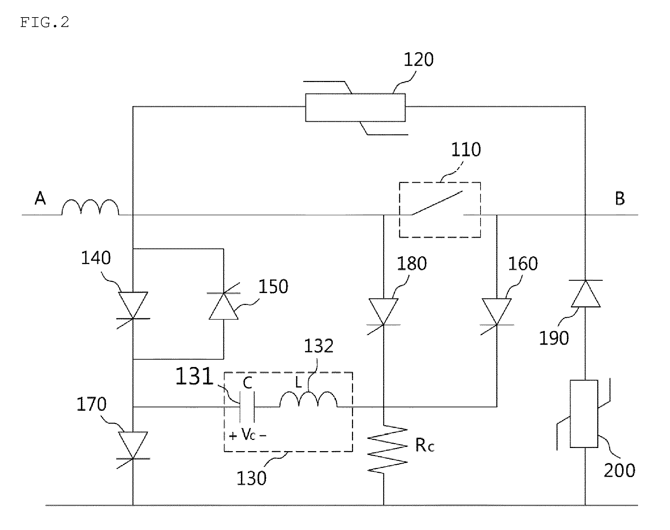

FIG. 2 is a configuration diagram of a bidirectional DC circuit breaker according to an embodiment of the present invention.

Referring to FIG. 2, the bidirectional DC circuit breaker 100 according to an embodiment of the present invention includes a main switch 110 installed between one side A and the other side B of a DC line 10. When a fault occurs at either A or B, the main switch 110 serves to break the DC line 10 in order to prevent fault current from continuing to flow into the circuit in which the fault has occurred. To this end, the main switch 110, which is closed in a normal state, is opened when a fault occurs. The switching operation of the main switch 110 is controlled by control signals from a control unit (not illustrated).

Here, a first nonlinear resistor 120 is connected in parallel with the main switch 110 in order to prevent excessive voltage, equal to or greater than a rated voltage, from being applied to the two ends of the bidirectional DC circuit breaker 100 when the main switch 110 is opened. When a high voltage equal to or greater than a preset reference voltage arises from a fault and is induced at the two ends of the bidirectional DC circuit breaker 100, the first linear resistor 120 is automatically turned on and consumes the high voltage. In the present embodiment, the nonlinear resistor 120 may be implemented as a varistor.

In the present embodiment, because a high voltage is induced in the DC line 10, a high current flows in the main switch 110. Accordingly, when the main switch 110 is opened due to the occurrence of a fault, an arc is generated across the switching terminals of the main switch 110, and a DC fault current continuously flows in the DC line 10 through the arc. Therefore, in the present invention, an additional device or circuit is required in order to completely break the fault current by extinguishing the arc.

Specifically, an L/C circuit 130 and a switching element for charging 140, first connected in series, are connected in parallel with the main switch 110. The L/C circuit 130 is configured to include a capacitor 131 and a reactor 132, which are connected in series. The switching element for charging 140 is switched in order to supply a charging current to the L/C circuit 130. Specifically, in a normal state in which the main switch 110 is closed, the switching element for charging 140 is turned on and supplies a charging current from A or B to the L/C circuit 130, whereby the capacitor 131 is charged. Then, when charging of the capacitor 131 is completed, the switch element for charging 140 is turned off because the current passing through it becomes zero. Accordingly, the charging current is prevented from being supplied to the capacitor 131. This is intended to supply the current, induced by the voltage +Vc already charged in the capacitor 131, to the main switch 110.

Meanwhile, first and second switching elements 150 and 160 are connected with the two ends of the L/C circuit 130, whereby a first closed circuit is formed through the L/C circuit 130 and the main switch 110. Here, the first and second switching elements 150 and 160 are switched in order for current to flow in the first direction along the first closed circuit by the voltage +Vc, charged in the capacitor 131 of the L/C circuit 130. Also, third and fourth switching elements 170 and 180 are connected with the two ends of the L/C circuit 130, whereby a second closed circuit is formed through the L/C circuit 130 and the main switch 110. The third and fourth switching elements 170 and 180 are switched in order for current to flow in the second direction along the second closed circuit by the voltage +Vc, charged in the capacitor 131. Another embodiment may further include a diode 190, installed in the second closed circuit in order to conduct current only in the second direction, and/or a second nonlinear resistor 200. Such a diode 190 conducts current in the second closed circuit only in the second direction but does not conduct current in the direction opposite thereto, whereby current is prevented from flowing to ground when the current flows in the first direction. Also, the second nonlinear resistor 200 is connected in series with the diode 190 in order to prevent energy at B from freewheelingly resonating after breaking a fault current in the main switch 110. Here, the first closed circuit differs from the second closed circuit. Also, both the first direction and the second direction mean the direction in which current flows, and they represent the flow of current in different directions.

The first and second switching elements 150 and 160 are installed in the same direction so that current flows in the first direction when they are turned on. Also, the third and fourth switching elements 170 and 180 are installed in the same direction so that current flows in the second direction when they are turned on. Here, the current, flowing in the first and second direction, is induced by the voltage +Vc charged in the capacitor 131 of the L/C circuit 130, and this current is supplied to the main switch 110 in the first direction or in the second direction so as to extinguish an arc generated in the main switch 110 when the main switch 110 is opened. To this end, this current must be supplied to the main switch 110 in the direction opposite that of the current that is flowing through the arc generated in the main switch 110. Therefore, the first direction or the second direction is selected depending on the direction in which the current flows through the arc in the main switch 110. In other words, when current needs to flow in the first direction, the first and second switching elements 150 and 160 are turned on, whereas when current needs to flow in the second direction, the third and fourth switching elements 170 and 180 are turned on. Of course, the turning on and off of the first and second switching elements 150 and 160 is implemented in the opposite way to the turning on and off of the third and fourth switching elements 170 and 180.

In the present embodiment, it is desirable for the first switching element 150 to be connected in parallel with the switching element for charging 140. Although not illustrated in the drawing, the (on/off) operations of the switching element for charging 140 and the first to fourth switching elements 150, 160, 170 and 180 are controlled by a control unit (not illustrated). These switching elements 140 to 180 may include, for example, power semiconductor switches. These power semiconductor switches are elements, the turn-on control of which is possible, and may be implemented as, for example, thyristors. Alternatively, as elements, the turn-on/turn-off control of which is possible, they may be implemented as, for example, a GTO, IGCT, IGBT, or the like.

Further, in the bidirectional DC circuit breaker 100 of the present embodiment, a charging resistor Rc is connected between the L/C circuit 130 and a ground GND. Through this charging resistor Rc, the capacitor 131 of the L/C circuit 130 is initially charged with a DC voltage Vc.

As shown in the drawing, the first and second switching elements 150 and 160 are connected with the two ends of the L/C circuit 130 and the two ends of the main switch 110 in the first closed circuit, thus conducting current in the first direction. Also, the third and fourth switching elements 170 and 180 are connected with the two ends of the L/C circuit and the two ends of the main switch 110 in the second closed circuit, thus conducting current in the second direction.

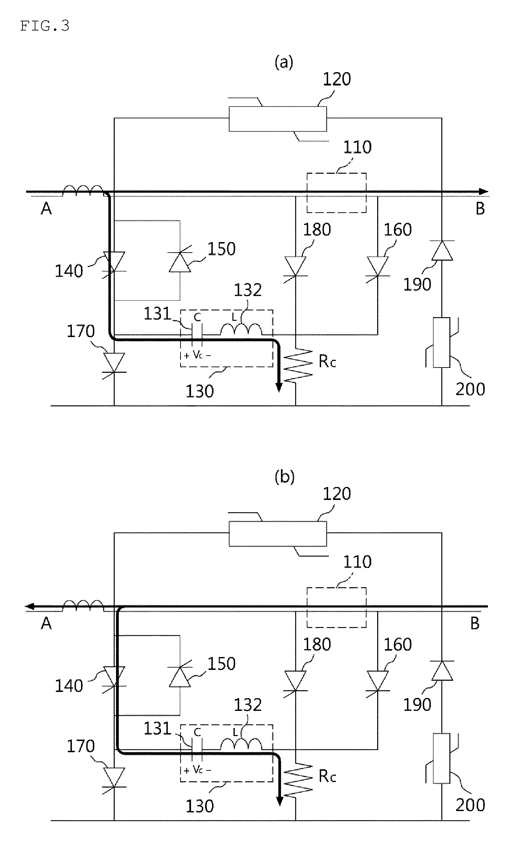

FIG. 3 is a diagram that shows the flow of current in a normal state in a bidirectional DC circuit breaker according to an embodiment of the present invention.

In FIG. 3, (a) shows that current is supplied from one side A to the other side B, and (b) shows that current is supplied from B to A. In the normal state, the main switch 110 is closed, the switching element for charging 140 is turned on so as to conduct current, and the first to fourth switching elements 150 to 180 are turned off, and thus no current flows therethrough.

Therefore, as shown in (a), the current supplied from A flows along the DC line 10 and is delivered to B via the main switch 110. Also, the current supplied from A flows to the L/C circuit 130 and the charging resistor Rc through the switching element for charging 140. Accordingly, a DC voltage +Vc is charged in the capacitor 131 of the L/C circuit 130. For the convenience of description, the voltage charged in the capacitor 131 by the current supplied through the switching element for charging 140 is referred to as +Vc, as illustrated in (a) of FIG. 3. Hereinafter, it may be referred to in the same way.

Further, in (b), because the main switch 110 is closed in the normal state, the current supplied from B flows along the DC line 10 and is delivered to A via the main switch 110. Here, the current supplied from B also flows to the L/C circuit 130 and the charging resistor Rc through the switching element for charging 140, which is turned on. Accordingly, the DC voltage +Vc is charged in the capacitor 131 of the L/C circuit 130.

As described above, because the switching element for charging 140 is turned on in the normal state, the capacitor 131 of the L/C circuit 130 is charged with the voltage +Vc by the current supplied from A or B.

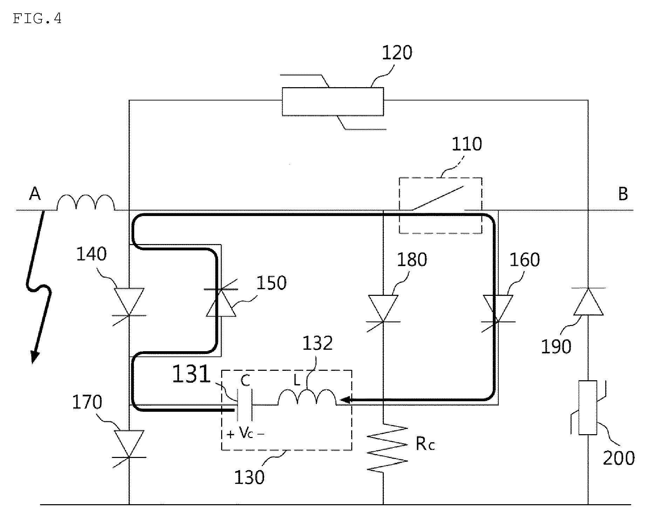

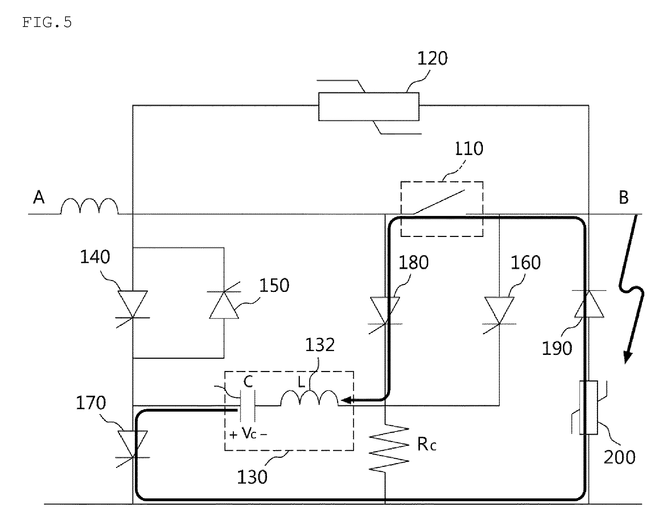

FIG. 4 is a diagram that shows the process of breaking a fault current in a bidirectional DC circuit breaker according to an embodiment of the present invention when a fault occurs on one side A of a high-voltage DC line, and FIG. 5 is a diagram that shows the process of breaking a fault current in a bidirectional DC circuit breaker according to another embodiment of the present invention when a fault occurs on the other side B of a high-voltage DC line.

First, in the normal state, as shown in FIG. 3, the DC voltage +Vc has been charged in the capacitor 131. Here, when a fault occurs at A, the control unit detects the fault and opens the closed main switch 110, as illustrated in FIG. 4. When the main switch 110 is opened, an arc is generated across the switching terminals of the main switch 110, and the fault current continuously flows from B to A through the arc.

Here, in the state in which the third and fourth switching elements 170 and 180 are turned off, the first and second switching elements 150 and 160 are turned on, whereby the voltage +Vc charged in the capacitor 131 causes current to flow in the first direction through the first switching element 150, the main switch 110, and the second switching element 160. This current creates a zero current in the main switch 110, whereby the arc is extinguished. As described above, it is desirable for the current supplied to the main switch 110 in the first direction to have a magnitude that is greater than that of the fault current and to flow in the opposite direction to the fault current, which continuously flows through the arc in the main switch 110. To this end, the charging capacity of the capacitor may be determined.

After the fault current is breaked in the main switch 110 by extinguishing the arc generated in the main switch 110, the voltage at B rapidly increases compared to A. The voltage rapidly increased at B is consumed in the nonlinear resistor 120, which is connected in parallel with the main switch 110. At the same time, the switching element for charging 140 is turned on again, and some of the current is supplied to the L/C circuit 130 therethrough, whereby the capacitor 131 is recharged with +Vc.

Here, the bidirectional DC circuit breaker 100 of the present invention has a characteristic such that the operation of reclosing the main switch 110 is possible. In other words, when a fault at A is eliminated after opening the main switch 110, the control unit closes the main switch 110 so as to make a closed circuit again in the DC line 10. If the fault at A is not eliminated after the closed circuit is made by closing the main switch 110, the above-mentioned processes are repeated. This reclosing operation is possible because the capacitor 131 maintains a charged state with +Vc in the L/C circuit 130 after the arc is extinguished in the main switch 110.

As described above, the bidirectional DC circuit breaker 100 supplies current to the main switch 110 using the voltage charged in the capacitor 131 of the L/C circuit 130, whereby the arc generated in the main switch 110 is extinguished, and the fault current flowing through the arc is breaked.

Meanwhile, when a fault occurs at B, the control unit detects the fault and opens the closed main switch 110, as illustrated in FIG. 5. When the main switch 110 is opened, an arc is generated across the switching terminals of the main switch 110, and the fault current continuously flows from A to B through the arc.

Here, in the state in which the first and second switching elements 150 and 160 are turned off, the third and fourth switching elements 170 and 180 are turned on, whereby the voltage +Vc charged in the capacitor 131 causes current to flow in the second direction through the third switching element 170, the main switch 110, and the fourth switching element 180. In another embodiment, a diode 190 may be additionally installed in the second closed circuit, and when such a diode 190 is installed, the current flows in the second direction through the third switching element 170, the diode 190, the main switch 110, and the fourth switching element 180. The diode 190 prevents current from being conducted in the direction opposite to the second direction. This is intended to prevent current from flowing to the ground GND in the direction opposite to the second direction when the flow of current is generated in the first direction. The current supplied in the second direction causes a zero current in the main switch 110, whereby the arc is extinguished. As described above, it is desirable for the current supplied to the main switch 110 in the second direction to have a magnitude that is greater than that of the fault current and to have the opposite direction to the fault current, which continuously flows through the arc in the main switch 110.

After the fault current is breaked in the main switch 110 by extinguishing the arc generated in the main switch 110, the voltage at A rapidly increases compared to B. The voltage rapidly increased at A is consumed in the nonlinear resistor 120, which is connected in parallel with the main switch 110. At the same time, the switching element for charging 140 is turned on again, and some of the current is supplied to the L/C circuit 130 therethrough, whereby the capacitor 131 is recharged with +Vc. Also, the application of the nonlinear resistor 200, which is connected in series with the diode 190, may eliminate a problem in which energy at B freewheelingly resonates due to the diode 190 after the fault current in the main switch 110 is breaked.

Here, in the bidirectional DC circuit breaker 100 of the present invention shown in FIG. 5, the operation of reclosing the main switch 110 is possible. In other words, when a fault at B is eliminated after opening the main switch 110, the control unit closes the main switch 110 so as to make a closed circuit in the DC line 10. If the fault at B is not eliminated after the closed circuit is made by closing the main switch 110, the above-mentioned processes are repeated. This reclosing operation is possible because the capacitor 131 maintains a charged state with +Vc in the L/C circuit 130 after the arc is extinguished in the main switch 110.

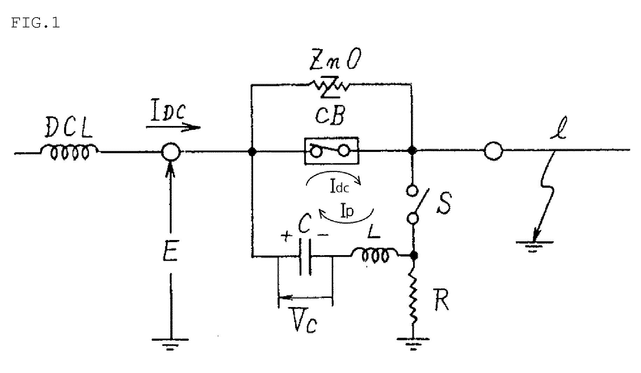

As described above, the bidirectional DC circuit breaker 100 according to the present invention is characterized in that it uses a switching element for charging 140 rather than using the main switch CB, as in the conventional art, which is illustrated in FIG. 1. Therefore, rather than increasing the oscillation of current through LC resonance, as in the conventional art, reverse current is applied to the main switch by the voltage initially charged in the capacitor 131 of the L/C circuit 130. This may increase the breaking speed. Also, in the conventional art, a resonance current is increased by LC resonance, and when the magnitude thereof is the same as that of the fault current, an arc is extinguished. However, in the present invention, the voltage charged in the capacitor 131, determined based on the capacity of the capacitor 131, induces current to flow in the direction opposite that of the fault current and to be applied to the main switch 110 so as to create a zero current, whereby the arc is extinguished.

Although the present invention has been described above in connection with the preferred embodiments, the present invention is not limited to the above embodiments. Those skilled in the art will appreciate that various modifications, additions and substitutions are possible, without departing from the scope and spirit of the invention as disclosed in the accompanying claims. Accordingly, the scope of the present invention should be defined by the scope of the appended claims and equivalents thereof.

## Claims

1. A bidirectional DC circuit breaker for breaking current in a DC line, comprising:
a main switch (110), installed in the DC line, for breaking current of the DC line by being opened when a fault occurs on one side or the remaining side of the DC line;
an L/C circuit (130), which is connected in parallel with the main switch (110) and includes a capacitor (131) and a reactor (132), which are connected in series with each other;
a switching element for charging (140), which is connected in series with the L/C circuit (130) and is switched in order to supply a charging current for charging the capacitor (131);
first and second switching elements (150, 160) for forming a first closed circuit between the L/C circuit (130) and the main switch (110) and switching a flow of current in a first direction; and
third and fourth switching elements (170, 180) for forming a second closed circuit between the L/C circuit (130) and the main switch (110) and switching a flow of current in a second direction,
wherein when the main switch (110) is opened, current is supplied to the main switch (110) in the first direction or the second direction by the voltage charged in the capacitor (131), whereby an arc generated in the main switch (110) is extinguished.

2. The bidirectional DC circuit breaker of claim 1, further comprising a charging resistor (Rc), installed between the L/C circuit (130) and a ground (GND), for charging the capacitor (131) using the charging current.

3. The bidirectional DC circuit breaker of claim 1 or 2, wherein each of the switching element for charging (140) and the first to fourth switching elements (150 to 180) includes a power semiconductor switch, turn-on/turn-off control of which is possible.

4. The bidirectional DC circuit breaker of claim 3, further comprising a diode (190), installed in the second closed circuit, for conducting current only in the second direction.

5. The bidirectional DC circuit breaker of claim 4, further comprising a nonlinear resistor (200) connected in series with the diode (190) in the second closed circuit.

6. The bidirectional DC circuit breaker of claim 3, wherein the first and second switching elements (150, 160) are connected with two ends of the L/C circuit (130) and two ends of the main switch (110) in the first closed circuit so as to conduct current in the first direction.

7. The bidirectional DC circuit breaker of claim 6, wherein the third and fourth switching elements (170, 180) are connected with the two ends of the L/C circuit (130) and the two ends of the main switch (110) in the second closed circuit so as to conduct current in the second direction.

8. The bidirectional DC circuit breaker of claim 1, wherein the switching element for charging (140) is configured to:
conduct the charging current to the capacitor (131) by being turned on in a state in which the main switch (110) is closed; and
break the charging current from being supplied to the capacitor (131) by being turned off when charging of the capacitor (131) is completed.

9. The bidirectional DC circuit breaker of claim 8, wherein if an arc is generated when the main switch (110) is opened, the first and second switching elements (150, 160) are turned on, current is supplied to the main switch (110) in the first direction by the voltage (Vc) charged in the capacitor (131), and the supplied current causes a zero current at the main switch (110), whereby the arc generated in the main switch (110) is extinguished.

10. The bidirectional DC circuit breaker of claim 9, wherein the current supplied to the main switch (110) has a magnitude that is greater than that of a fault current and has a direction opposite to that of the fault current, which continuously flows through the arc in the main switch (110).

11. The bidirectional DC circuit breaker of claim 8, wherein if an arc is generated when the main switch (110) is opened, the third and fourth switching elements (170, 180) are turned on, current is supplied to the main switch (110) in the second direction by the voltage (Vc) charged in the capacitor (131), and the supplied current causes a zero current at the main switch (110), whereby the arc generated in the main switch (110) is extinguished.

12. The bidirectional DC circuit breaker of claim 11, wherein the current supplied to the main switch (110) has a magnitude that is greater than that of a fault current and has a direction opposite to that of the fault current, which continuously flows through the arc in the main switch (110).

13. The bidirectional DC circuit breaker of claim 9 or 11, wherein when the arc is extinguished in the main switch (110), the switching element for charging (140) is turned on so as to charge the capacitor (131), and when charging of the capacitor (131) is completed, a closed circuit is formed by closing the main switch (110).
